# EUROPEAN PATENT SPECIFICATION

(11) **EP 1 835 690 B1**
(45) Date of publication and mention of the grant of the patent: **22.10.2014**
(21) Application number: 06290430.5
(22) Date of filing: 15.03.2006
(51) Int. Cl.: H04L 29/06, H04L 12/24

(54) **TR69 based service interface for OSGi bundles**
TR69 basierte Service-Schnittstelle für OSGi-Bündel
Interface de service basés sur TR69 pour un faisceau OSGi

(43) Date of publication of application: 19.09.2007
(73) Proprietor: ALCATEL LUCENT, 92100 Boulogne-Billancourt (FR)
(72) Inventor: Bracke, Sylvie Adriana Louisa, B-2050 Antwerpen (BE); Bouchat, Christele, 2060 Antwerp (BE); Acke, Willem Jozef Arnaat, 2820 Rijmenam (BE)
(74) Representative: ALU Antw Patent Attorneys

(56) References cited:
- WO-A-2005/117389
- US-A1- 2005 144 262
- US-A1- 2005 195 390
- J. BERNSTEIN, T. SPETS, G. BATHRICK, G. PITSOULAKIS: "CPE WAN Management Protocol" DSL FORUM TR-069, 1 April 2004 (2004-04-01), pages 1-109, XP002385974 Retrieved from the Internet: URL:http://www.dslforum.org/aboutdsl/Techn ical_Reports/TR-069.doc>
- J. BERNSTEIN, T. SPETS, C. BOUCHAT, G. BATHRICK: "DSL Forum TR-106: Data Model Template for TR-069 Enabled Devices" DSL FORUM, 1 September 2005 (2005-09-01), pages 1-29, XP002386137 Retrieved from the Internet: URL:http://www.dslforum.org/aboutdsl/Techn ical_Reports/TR-106.doc>
- OSGI SPECIFICATION RELEASE 4: "OSGi Service Platform Core Specification" OSGI ALLIANCE, 1 August 2005 (2005-08-01), pages 1-276, XP002386143 Retrieved from the Internet: URL:http://osgi.org/documents/osgi_technol ogy/download/r4-specs/OSGi_R4.core.pdf>

## Description

The present invention relates to a method to configure data of a bundle deployed on an OSGi service platform in a device, said OSGi service platform being remotely managed by a remote management server via a management agent using a remote management Protocol (TR69).

Such a method is generally known in the art.

Founded in March 1999, the OSGi^{™} Alliance (Open service Gateway Initiative) specify, create, advance, and promote wide industry adoption of an open service delivery and management platform. The OSGi Alliance serves as the focal point for a collaborative ecosystem of service providers, developers, manufacturers and consumers. The OSGi technology is designed to ease the development of new services and applications for the latest generation of networked devices. Adding an OSGi service platform to a device, enables to manage the life cycle of the software components in the device from anywhere in the network. Software components can be installed, updated, or removed on the fly without having to disrupt the operation of the device. The OSGi service platform is a Java-based service platform running on top of a Java Virtual Machine (JVM) residing in the device.

The remote management Protocol is a CPE WAN management Protocol (CWMP) defined by the DSL forum's Technical Report TR-069 (hereafter also referred to as TR69) for secure auto-configuration as well as other CPE management functions. In other words, TR-069 is a protocol for communication between a CPE and Auto-configuration server (ACS) that encompasses secure auto-configuration as well as other CPE management functions within a common framework. The Technical report TR-069 is for instance published on the Internet at:
< *http:lldslforum.or*/*aboutdsl*/*tr_ttable.html*>.

The OSGi service platform specification R3 (OSGi Alliance) specifies a configuration admin service. The configuration admin service will provide to every bundle, hy registering a Managed service or Managed service Factory, a way to store data persistently in one or more configuration objects (Dictionaries). The management agent, on the OSGi service platform, can also use this configuration admin service to configure bundles.

The TR69 protocol, defined by the DSL forum, can be used as management protocol between the management agent on the OSGi service platform and a remote management server.

In the method known in the art, the management agent configures a bundle, deployed on the OSGi service platform, via the configuration admin service.

A first problem with this known method is that the configuration admin service uses as key, to link configuration objects to bundles, the "persistent service id". This persistent service id needs to be provided by the bundle when it registers a Managed service or Managed service Factory. The management agent needs to know this persistent service id to be able to configure the bundle. There is no mechanism specified, by the OSGi specification, how this id should be provided to the management agent with installation of the bundle.

Moreover, nesting of data in a configuration object can only be done one level deep (via Array or Vector) for objects of one type.

Finally, the management agent will not communicate with the bundle itself. When data is of the wrong format or data is missing, the bundle cannot communicate this to the remote management server via the management agent at configuration time.

Document WO 2005/117389 discloses the preamble of claim 1.

An object of the present invention is to provide an improvement to the method of the above known type which allows, amongst other, the operator and platform provider to separate the bundle installation, which is OSGi specific, from the management of the service/application offered by the bundle.

According to the invention, this object is achieved due to the fact that said method comprises the step of said bundle to offer a service object conform to the TR69/TR106 protocol as defined in the DSL forum and whereby said bundle is manageable via a TR69-like service Interface by said management agent on the OSGi service platform.

The TR69-like service interface is a Java-interface whereby the present method offer equivalent functionality as parameter- and object-based methods defined by the TR69 protocol. In this way, configuration data of the bundle is provided as a TR69/TR106-conforming service object, the configuration of the bundle by the management agent is done via the TR69-like service interface instead of using dictionaries via the configuration admin service.

TR106, also defined by the DSL forum, specifies how configuration data of a service (remotely managed via the TR69 protocol) should be organized: a service object (one or more instances) will be linked under "Device.Services". A service object may contain other objects, parameters and even multiple instances of objects (tables).

The bundle is managed in a TR69-TR106 conform way. Next to a uniform way to manage bundle configuration data on the side of the remote management server, this provides also the opportunity to put notification and access list attributes on parameter level as defined in TR69.

Another advantage of the present method is that formatting of configuration data is not so restricted as with the configuration admin service.

Furthermore, the bundle has the opportunity to react on parameter changes towards the remote management server.

Another characterizing embodiment of the present invention is that said method comprises the step of said bundle implementing and registering to a OSGi framework service registry said TR69-like service Interface, providing the name, version and supported profiles of the service object it is offering.

The TR69-like service Interface is thereby implemented and registered instead of registering a Managed service or Managed service Factory.

In a preferred characterizing embodiment of the present invention, said method comprises the steps of
- the management agent notifying the remote management server that said bundle implements and registers the TR69-like service Interface for said service object;
- the remote management server transmitting to the management agent configuration requests for said service object;
- the management agent then dispatching the configuration requests for said service object to said bundle via the TR69-like service interface and awaiting the result; and
- the management agent forwarding the result of the configuration request to the remote management server.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
- Fig. 1 represents a device using the method of the present invention;
- Figs. 2 to 3 show the general known method; and
- Figs. 4 and 5 show the method of the present invention.

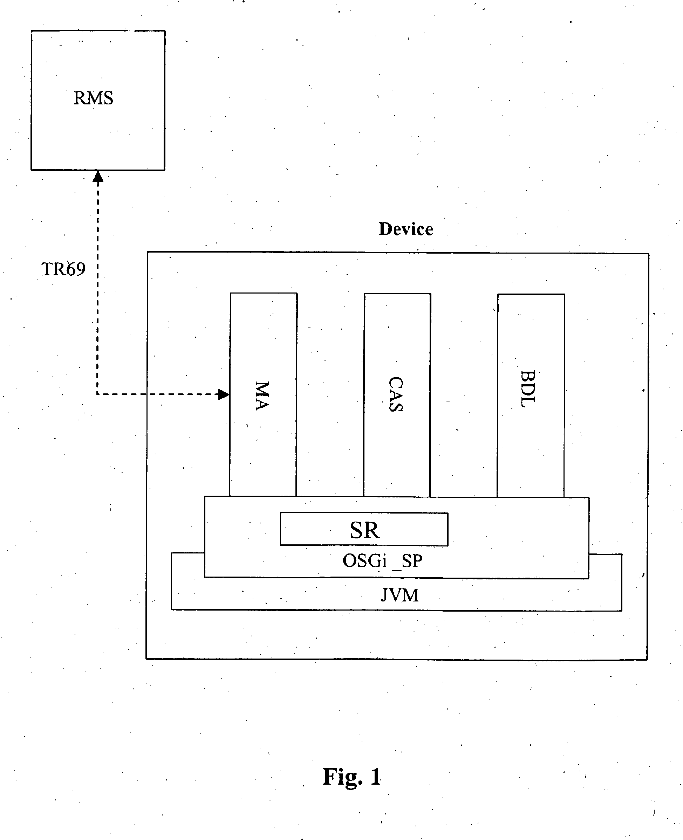

The device shown on Fig. 1 is associated to an OSGi service platform OSGi_SP (OSGi = Open service Gateway Initiative) that enables to manage the life cycle of the software components in the device from anywhere in a network. Software components can be installed, updated, or removed on the fly without having to disrupt the operation of the device. The OSGi service platform OSGi_SP is a Java-based service platform running on top of a JVM residing in the device.

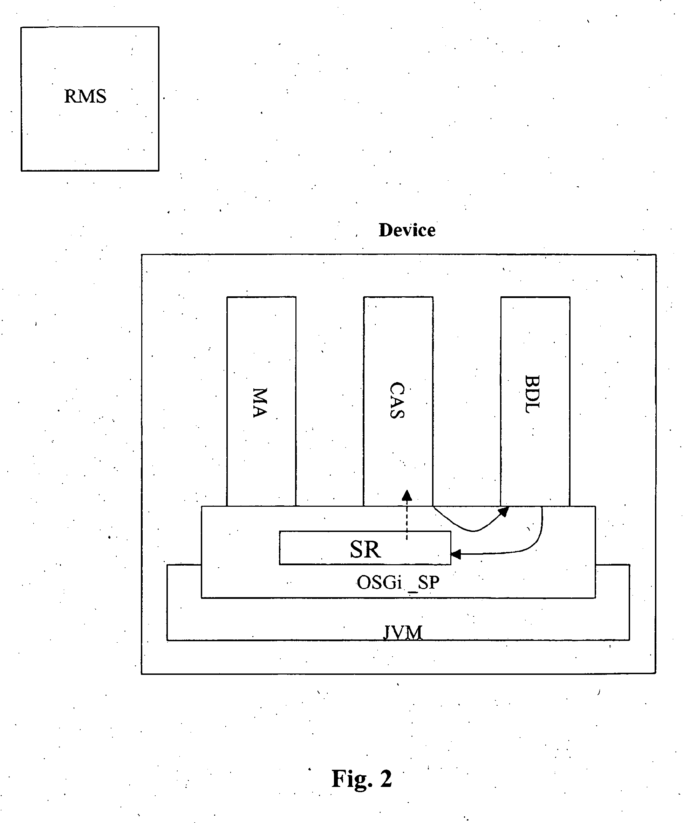

The OSGi service platform specification R3 (OSGi Alliance) specifies a configuration admin service CAS. The configuration admin service CAS will provide to every Bundle, e.g. the Bundle BDL as shown on Fig. 2, registering a Managed service or Managed service Factory to a OSGi_SP service registry SR, a way to store data persistently in one or more configuration objects (Dictionaries).

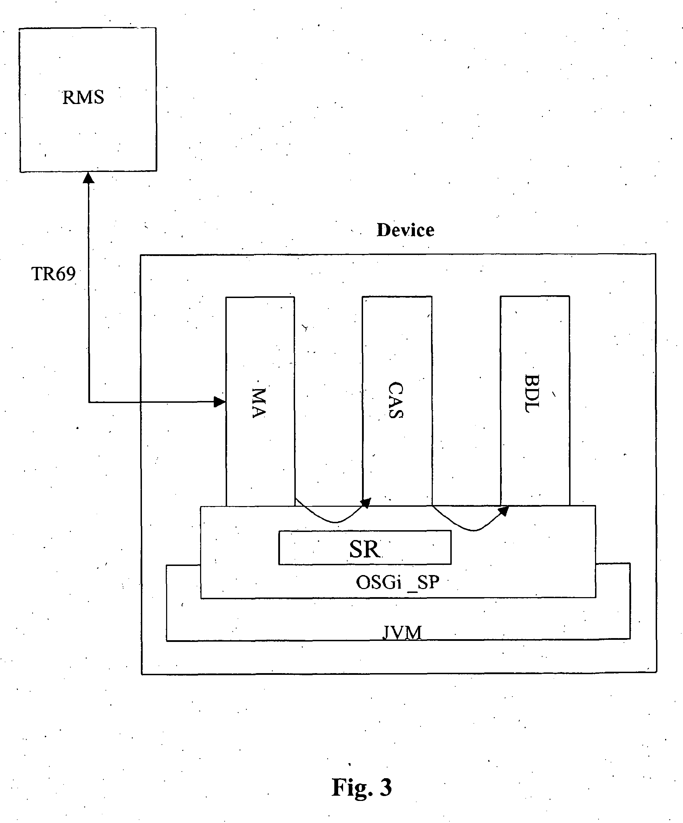

Fig. 3 shows that a management agent MA, on the OSGi service platform OSGi_SP, can also use this configuration admin service CAS to configure bundles.

The TR69 protocol, defined by the DSL forum's Technical Report TR-069, is used as management protocol between the management agent MA on the OSGi service platform OSGi_SP and a remote management server RMS.

In the present method, a bundle BDL, deployed on the OSGi service platform OSGi_SP, will offer a TR69/TR106-conforming service object, manageable via a TR69-like service interface by the management agent MA on the OSGi service platform OSGi_SP.

Technical Report TR-106 , defined by the DSL forum, specifies how configuration data of a service (remotely managed via the TR69 protocol) should be organized: a service object (one or more instances) will be linked under "Device.Services". A service object may contain other objects, parameters and even multiple instances of objects (tables).

Since configuration data of a bundle is provided as a TR69/TR106-conforming service object, the configuration of the bundle BDL by the management agent MA can be done via a TR69-like service interface.

The bundle BDL will implement and register a TR69-like service interface to the service registry SR, providing the name, version and supported profiles of the service object(s) it is offering.

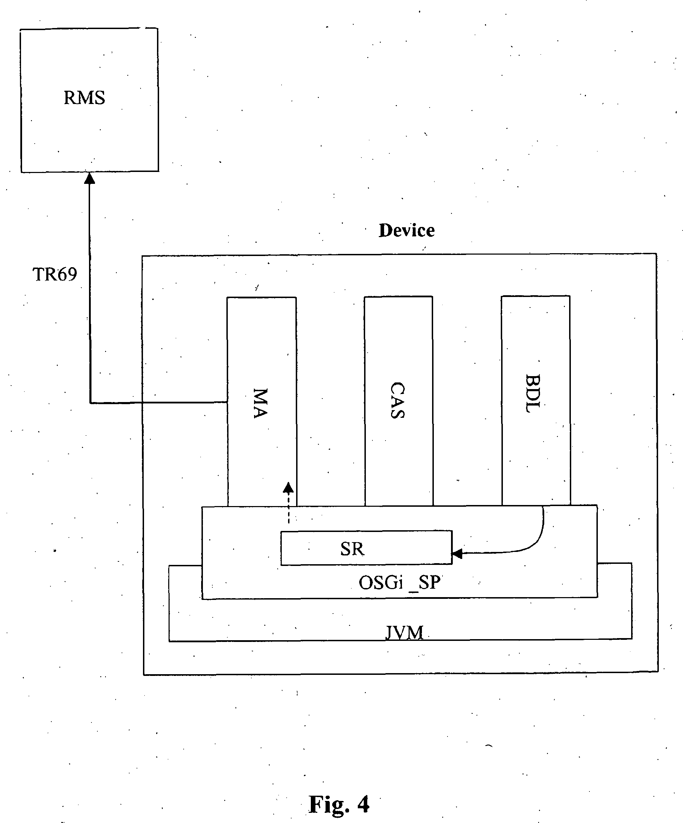

As shown in Fig. 4, the management agent MA notifies the remote management server RMS of the event.

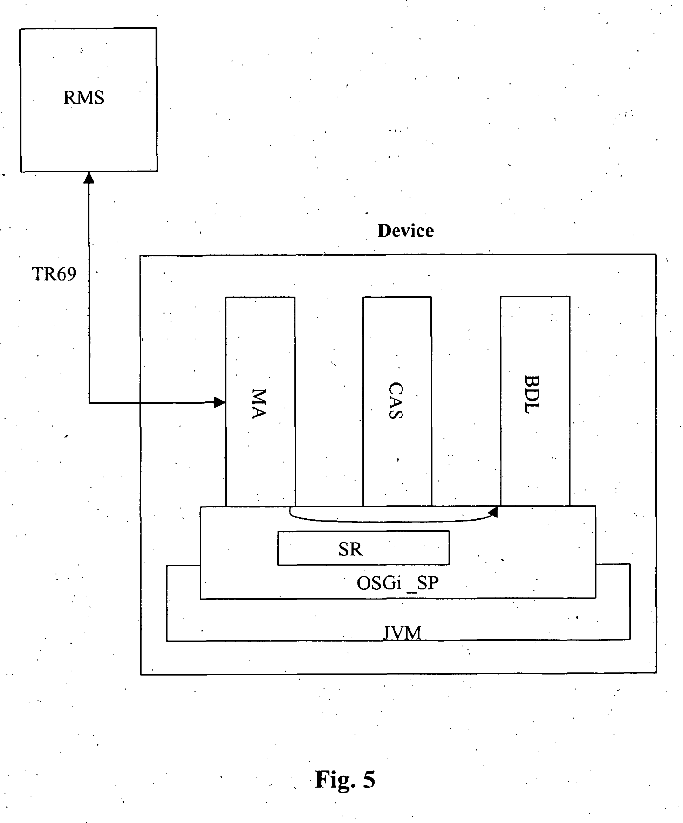

From that moment onwards, as illustrated in Fig. 5, the management agent MA dispatches configuration requests, from the remote management server RMS, for this service object via the TR69-like service interface to the bundle BDL.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method to configure data of a bundle (BDL) deployed on an OSGi service platform (OSGi_SP) in a device, said OSGi service platform being remotely managed by a remote management server (RMS) via a management agent (MA) using the remote, Customer Premises Equipment Wide Area Network, CPE WAN, Management Protocol (CWMP) as defined by the DSL forum's Technical Report TR-069,
said method comprising the step of said bundle (BDL) to offer a service object conform to the TR-069/TR-106 protocol as defined in the DSL forum's Technical Report TR-069 and whereby said bundle is manageable via a TR-069-like service Interface by said management agent (MA) on the OSGi service platform (OSGi_SP),
***characterized in that*** said method comprises the step of said bundle (BDL) implementing and registering to an OSGi framework service registry (SR) said TR-069-like service Interface, providing the name, version and supported profiles of the service object it is offering.

2. The method according to claim 1, ***characterized in that*** said method comprises the steps of
- the management agent (MA) notifying the remote management server (RMS) that said bundle implements and registers the TR-069-like service Interface for said service object;
- the remote management server transmitting to the management agent configuration requests for said service object; and
- the management agent then dispatching the configuration requests for said service object to said bundle via the TR-069-like service interface and awaiting the result;
- the management agent forwarding the result of the configuration request to the remote management server.

## Patentansprüche

1. Verfahren zur Konfiguration von Daten eines auf einer OSGi-Dienstplattform (OSGi_SP) in einer Vorrichtung bereitgestellten Bundles (BDL), wobei die besagte OSGi-Dienstplattform von einem entfernten Verwaltungsserver (RMS) über einen Verwaltungsagenten (MA) unter Verwendung des Weitverkehrsnetz-Protokolls für die Verwaltung von entfernten Ausrüstungen in Kundenräumlichkeiten, auch als CPE-WAN-Verwaltungsprotokoll (CWMP), wie in dem Technischen Bericht TR-069 des DSL-Forums definiert, bekannt, ferngesteuert verwaltet wird,
wobei das besagte Verfahren einen Schritt umfasst, in welchem das besagte Bundle (BDL) ein Dienstobjekt gemäß dem TR-069/TR-106-Protokoll wie in dem Technischen Bericht TR-069 des DSL-Forums definiert bereitstellt, und wobei das besagte Bundle über eine TR-069-ähnliche Dienstschnittstelle durch den besagten Verwaltungsagenten (MA) auf der OSGi-Dienstplattform (OSGi_SP) verwaltet werden kann,
***dadurch gekennzeichnet, dass*** das besagte Verfahren einen Schritt umfasst, in welchem das besagte Bundle (BDL) die besagte TR-069-ähnliche Dienstschnittstelle implementiert und bei einer OSGi-Framework-Service-Registry (SR) unter Bereitstellung des Namens, der Version und der von ihm unterstützten Dienstobjekt-Profile registriert.

2. Verfahren nach Anspruch 1, ***dadurch gekennzeichnet, dass*** das besagte Verfahren die folgenden Schritte umfasst:
- Der Verwaltungsagent (MA) benachrichtigt den entfernten Verwaltungsserver (RMS), dass das besagte Bundle die TR-069-ähnliche Dienstschnittstelle für das besagte Dienstobjekt implementiert und registriert;
- der entfernte Verwaltungsserver überträgt Konfigurationsanforderungen für das besagte Dienstobjekt an den Verwaltungsagenten; und
- der Verwaltungsagent versendet anschließend die Konfigurationsanforderungen für das besagte Dienstobjekt über die TR-069-ähnliche Dienstschnittstelle an das besagte Bundle und wartet auf das Ergebnis;
- der Verwaltungsagent leitet das Ergebnis der Konfigurationsanforderung an den entfernten Verwaltungsserver weiter.

## Revendications

1. Procédé pour configurer des données d'un module (BDL) déployé sur une plate-forme de services OSGi (OSGi_SP) dans un dispositif, ladite plate-forme de services OSGi étant gérée à distance par un serveur de gestion à distance (RMS) par l'intermédiaire d'un agent de gestion (MA) en utilisant le protocole de gestion à distance de réseau étendu d'équipement des locaux d'abonné, CPE WAN (CWMP) tel que défini par le rapport technique TR-069 du forum DSL,
ledit procédé comprenant l'étape d'offre par ledit module (BDL) d'un objet de service conforme au protocole TR-069/TR-1 06 tel que défini dans le rapport technique TR-069 du forum DSL, ledit module pouvant être géré par l'intermédiaire d'une interface de services de type TR-069 par ledit agent de gestion (MA) sur la plate-forme de services OSGi (OSGi_SP),
***caractérisé en ce que*** ledit procédé comprend l'étape de mise en oeuvre et d'enregistrement dans un registre de services (SR) d'architecture OSGi par ledit module (BDL) de ladite interface de services de type TR-069, fournissant le nom, la version et les profils pris en charge de l'objet de service qu'il offre.

2. Procédé selon la revendication 1, ***caractérisé en ce que*** ledit procédé comprend les étapes suivantes
- l'agent de gestion (MA) notifie le serveur de gestion à distance (RMS) que ledit module met en oeuvre et enregistre l'interface de services de type TR-069 pour ledit objet de service ;
- le serveur de gestion à distance transmet à l'agent de gestion des demandes de configuration pour ledit objet de service ; et
- l'agent de gestion distribue alors les demandes de configuration pour ledit objet de service audit module par l'intermédiaire de l'interface de services de type TR-069 et attend le résultat ;
- l'agent de gestion transfère le résultat de la demande de configuration au serveur de gestion à distance.
